# EUROPÄISCHE PATENTSCHRIFT

(11) **EP 3 019 734 B1**
(45) Veröffentlichungstag und Bekanntmachung des Hinweises auf die Patenterteilung: **30.05.2018**
(21) Anmeldenummer: 14750143.1
(22) Anmeldetag: 08.07.2014
(51) Int. Cl.: F02M 26/05, F02M 26/16, F02M 26/43, F02D 41/00, F01N 13/10, F02B 37/02, F02D 19/02, F02D 17/02, F02M 26/41, F02M 26/71

(54) **VERBRENNUNGSKRAFTMASCHINE FÜR EINEN KRAFTWAGEN SOWIE VERFAHREN ZUM BETREIBEN EINER SOLCHEN VERBRENNUNGSKRAFTMASCHINE**
INTERNAL COMBUSTION ENGINE, IN PARTICULAR FOR A MOTOR VEHICLE, AND METHOD FOR OPERATING SUCH AN INTERNAL COMBUSTION ENGINE
MOTEUR À COMBUSTION INTERNE POUR VÉHICULE AUTOMOBILE ET PROCÉDÉ PERMETTANT DE FAIRE FONCTIONNER UN TEL MOTEUR À COMBUSTION INTERNE

(30) Priorität: 10.07.2013 DE 102013011587
(43) Veröffentlichungstag der Anmeldung: 18.05.2016
(73) Patentinhaber: Daimler AG, 70327 Stuttgart (DE)
(72) Erfinder: KÜNZEL, Stefan, 71336 Waiblingen (DE)
(74) Vertreter: JENSEN & SON
(86) Internationale Anmeldenummer: PCT/EP2014/001875
(87) Internationale Veröffentlichungsnummer: WO 2015/003801

(56) Entgegenhaltungen:
- DE-U1-202013 102 075
- US-A1- 2011 265 454

## Beschreibung

Die Erfindung betrifft eine Verbrennungskraftmaschine für einen Kraftwagen gemäß dem Oberbegriff von Patentanspruch 1 sowie ein Verfahren zum Betreiben einer solchen Verbrennungskraftmaschine gemäß dem Oberbegriff von Patentanspruch 5. Eine solche Verbrennungskraftmaschine sowie ein Verfahren zum Betreiben einer solchen Verbrennungskraftmaschine sind der DE 10 2008 064 264 A1 als bekannt zu entnehmen. Die Verbrennungskraftmaschine umfasst wenigstens zwei Brennräume sowie einen Abgastrakt. Der Abgastrakt weist wenigstens eine den Brennräumen zugeordnete und von Abgas aus den Brennräumen durchströmbare Abgasflut zum Führen des Abgases zu einer Turbine eines Abgasturboladers auf. Mit anderen Worten ist die wenigstens eine Abgasflut mit den wenigstens zwei Brennräumen fluidisch verbunden oder fluidisch verbindbar, so dass das Abgas aus den Brennräumen in die wenigstens eine Abgasflut einströmt und diese durchströmt.

Ferner ist eine von der Abgasflut abzweigende Abgasrückführleitung vorgesehen. Mittels einer solchen Abgasrückführleitung wird das Abgas aus der Abgasflut zumindest teilweise abgezweigt und vom Abgastrakt zu einem Ansaugtrakt der Verbrennungskraftmaschine rückgeführt. Das rückgeführte Abgas kann mit Frischluft in die Brennräume einströmen und bei in den Brennräumen ablaufenden Verbrennungen als Inertgas wirken. Hierdurch kann die Entstehung von sogenannten Hotspots bei den Verbrennungen vermieden werden. Als Hotspots werden solche Stellen bezeichnet, an denen es bei der Verbrennung zu übermäßigen Temperaturen kommt. Infolge dieser lokal hohen Temperaturen kann es an den Hotspots zur erhöhten Entstehung von Stickoxiden kommen. Mittels der Abgasrückführung können Stickoxid-Emissionen (NOₓ-Emissionen) gering gehalten werden.

Des Weiteren ist ein verstellbares Versperrelement vorgesehen, mittels welchem ein jeweiliger, von Abgas durchströmbarer Querschnitt der Abgasrückführleitung und der Abgasflut einstellbar ist. Ein und dasselbe Versperrelement ermöglicht somit ein Verändern des von Abgas durchströmbaren Querschnitts der Abgasrückführleitung und der Abgasflut. Mittels des Kontrollelements kann beispielsweise die Abgasrückführrate auf einfache und günstige Weise bedarfsgerecht eingestellt werden.

DE202013102075U1 offenbart einen mit zwei Abgasfluten Abgastrakt einer Verbrennungskraftmaschine, die abgeschaltet werden kann.

Die DE 10 2009 004 418 A1 offenbart ein Verfahren zur Nachbehandlung eines Abgasstroms einer mehrzylindrigen Brennkraftmaschine eines Fahrzeugs, insbesondere eines Nutzfahrzeugs. Die Brennkraftmaschine weist mehrere unterschiedliche Gruppen von Zylindern auf, denen jeweils eine Luftzuführleitung und eine Abgasleitung zugeordnet ist. Die Abgasleitungen münden mehrflutig in eine dementsprechend mehrflutig ausgebildete Abgasturbine eines Abgasturboladers, wobei der Abgasturbine ein Abgasnachbehandlungselement nachgeschaltet ist. In einem in Abhängigkeit von definierten Betriebsparametern der Brennkraftmaschine vorgegebenen Aufheiz-Betrieb der Brennkraftmaschine, insbesondere im Leerlauf- oder Schwachlastbetrieb der Brennkraftmaschine, wird ein durch wenigstens eine Aufheiz-Zylindergruppe gebildeter erster Teil der Zylindergruppen in einem vorgegebenen Maß gefeuert betrieben, während ein anderer durch wenigstens eine Abschalt-Zylindergruppe gebildeter zweiter Teil der Zylindergruppen entweder mit einer gegenüber einem definiertem Normalbetrieb und/oder gegenüber einer der wenigstens einen Aufheiz-Zylindergruppe zudosierten Kraftstoffmenge reduzierten Kraftstoffmenge teilgefeuert oder nicht-befeuert betrieben wird.

Ein nicht-befeuerter Betrieb von Brennräumen, insbesondere Zylindern, einer beispielsweise als Hubkolben-Verbrennungskraftmaschine ausgebildeten Verbrennungskraftmaschine wird üblicherweise auch als Zylinderabschaltung oder als Zylinderabschalt-Modus bezeichnet. Durch eine solche Zylinderabschaltung kann Kraftstoff eingespart werden, die in die Brennräume, die in dem nicht-befeuerten Betrieb betrieben werden, üblicherweise kein Kraftstoff eingebracht wird. Jedoch kann es bei einer solchen Zylinderabschaltung zu Problemen kommen, eine hinreichend hohe Abgasrückführrate zu realisieren, das heißt eine hinreichend hohe Menge an Abgas vom Abgastrakt über die Abgasrückführleitung an den Ansaugtrakt rückführen zu können, um in denjenigen der Brennräume, welche noch im gefeuerten Betrieb betrieben werden, die Entstehung von Stickoxiden gering halten zu können.

Es ist daher Aufgabe der vorliegenden Erfindung, eine Verbrennungskraftmaschine sowie ein Verfahren zum Betreiben einer solchen Verbrennungskraftmaschine zu schaffen, mittels welchen ein besonders kraftstoffverbrauchsarmer Betrieb der Verbrennungskraftmaschine realisierbar ist bei gleichzeitiger Realisierung hinreichend hoher Abgasrückführraten.

Diese Aufgabe wird durch eine Verbrennungskraftmaschine mit den Merkmalen des Patentanspruchs 1 sowie durch ein Verfahren zum Betreiben einer solchen Verbrennungskraftmaschine mit den Merkmalen des Patentanspruchs 5 gelöst. Vorteilhafte Ausgestaltungen mit zweckmäßigen und nicht-trivialen Weiterbildungen der Erfindung sind in den übrigen Ansprüchen angegeben.

Um eine Verbrennungskraftmaschine für einen Kraftwagen der im Oberbegriff des Patentanspruchs 1 angegebenen Art zu schaffen, mittels welcher ein besonders kraftstoffverbrauchsarmer Betrieb realisierbar ist bei gleichzeitiger Realisierung besonders Abgasrückführraten ist es erfindungsgemäß vorgesehen, dass die Verbrennungskraftmaschine in einem Zylinderabschalt-Modus betreibbar ist, in welchem ein Einbringen von Kraftstoff in einen ersten der Brennräume unterbleibt und in den zweiten Brennraum erfolgt. Mit anderen Worten wird im Zylinderabschalt-Modus der zweite Brennraum mit Kraftstoff versorgt, so dass im zweiten Brennraum Verbrennungsvorgänge ablaufen. Aus diesen Verbrennungsvorgängen resultiert Abgas, welches die Abgasflut durchströmt und in die mit der Abgasflut fluidisch verbundenen oder fluidisch verbindbare Rückführleitung abgezweigt werden kann.

Der erste Brennraum wird im Zylinderabschalt-Modus nicht mit Kraftstoff versorgt, so dass der erste Brennraum in einem nicht-befeuerten oder ungefeuerten Betriebszustand betrieben wird. Dadurch kann der Kraftstoffverbrauch der Verbrennungskraftmaschine gering gehalten werden. Da die Abgasflut jedoch mit Abgas aus dem zweiten Zylinder durchströmt wird, kann eine besonders hohe Menge an Abgas rückgeführt werden, so dass besonders hohe beziehungsweise hinreichende Abgasrückführraten realisierbar sind. Dadurch lassen sich die Stickoxid-Emissionen gering halten.

Die Abgasrückführrate ist dabei mittels des Versperrelements bedarfsgerecht einstellbar, wobei mittels ein und desselben Sperrelements sowohl der von dem Abgas durchströmbare Querschnitt der Abgasflut als auch der von dem Abgas durchströmbare Querschnitt der Abgasrückführleitung eingestellt werden kann. Hierbei geht jedoch nicht notwendigerweise jede Veränderung des durchströmbaren Querschnitts der Abgasrückführleitung mit einer Veränderung des durchströmbaren Querschnitts der Abgasflut einher. Wird jedoch mittels des Versperrelements der durchströmbare Querschnitt der Abgasflut verringert, so ist auf diese Weise ein besonders einfaches Einstellen einer besonders hohen Abgasrückführrate erreichbar.

Der Zylinderabschalt-Modus, welcher üblicherweise auch als Zylinderabschaltung bezeichnet wird, wird vorzugsweise im Teillastbetrieb der Verbrennungskraftmaschine eingestellt, in welchem ein vom Fahrer des Kraftwagens angefordertes Drehmoment von der Verbrennungskraftmaschine auch dann bereitgestellt werden kann, wenn lediglich ein Teil ihrer Brennräume in einem gefeuerten Betrieb und ein anderer Teil der Brennräume in einem ungefeuerten Betrieb, das heißt im Zylinderabschalt-Modus betrieben werden. Gemäß der Erfindung ist das Versperrelement zwischen einer ersten Stellung und wenigstens einer zweiten Stellung verstellbar. Das Versperrelement ist im Zylinderabschalt-Modus in die zweite Stellung verstellt, in welcher der Querschnitt der Abgasrückführleitung gegenüber der ersten Stellung vergrößert und der Querschnitt der Abgasflut verkleinert ist. Hierdurch können besonders große Mengen des die Abgasflut durchströmenden Abgases abgezweigt werden und die Abgasrückführleitung durchströmen, so dass dadurch besonders hohe Abgasrückführraten darstellbar sind.

Als besonders vorteilhaft hat es sich gezeigt, wenn der Querschnitt der Abgasflut mittels des Versperrelements in der zweiten Stellung fluidisch versperrt ist. Hierdurch kann das zumindest im Wesentlichen gesamte, die Abgasflut in dem Zylinderabschalt-Modus durchströmende bzw. in die Abgasflut einströmende und zumindest bis zu Abgasrückführleitung strömende Abgas aus der Abgasflut abgeführt und der Abgasrückführleitung zugeführt werden, um so trotz der Durchführung der Zylinderabschaltung besonders hohe Abgasrückführraten realisieren zu können.

Bei einer besonders vorteilhaften Ausführungsform der Erfindung ist es vorgesehen, dass die zweite Stellung gegenüber davon unterschiedlichen Stellungen, in die das Versperrelement verstellbar ist, eine den Querschnitt der Abgasrückführleitung maximal freigebende Stellung ist. Mit anderen Worten ist das Versperrelement in mehrere, den Querschnitt der Abgasrückführleitung nicht versperrende, sondern zumindest teilweise freigebende Stellungen verstellbar, zu denen auch die zweite Stellung gehört. Dabei ist die zweite Stellung die Stellung, in der der Querschnitt der Abgasrückführleitung im Vergleich zu den anderen, den Querschnitt der Abgasrückführleitung zumindest teilweise freigebenden Stellungen, am weitesten, das heißt maximal freigegeben ist. Hierdurch können Strömungswiderstände für das die Abgasrückführleitung durchströmende Abgas gering gehalten werden, so dass eine besonders hohe Menge des Abgases in kurzer Zeit rückgeführt werden können. Gemäß der Erfindung weist die Verbrennungskraftmaschine wenigstens einen dritten Brennraum auf, wobei der Abgastrakt wenigstens eine dem dritten Brennraum zugeordnete, von Abgas aus dem dritten Brennraum durchströmbare und von der Abgasflut zumindest teilweise fluidisch getrennte zweite Abgasflut zum Führen des Abgases zu der Turbine aufweist. Mit anderen Worten ist die zweite Abgasflut mit dem dritten Brennraum fluidisch verbunden oder verbindbar, so dass das Abgas aus dem dritten Brennraum in die zweite Abgasflut einströmen und diese durchströmen kann. Dabei ist es vorgesehen, dass eine Einbringung von Kraftstoff in den dritten Brennraum im Zylinderabschalt-Modus erfolgt. Hierdurch können auch im Zylinderabschalt-Modus hohe Leistungen beziehungsweise Drehmomente von der Verbrennungskraftmaschine bereitgestellt werden.

Als besonders vorteilhaft hat es sich dabei gezeigt, wenn die erste Abgasflut einer ersten Turbinenflut und die zweite Abgasflut einer zumindest teilweise von der ersten Turbinenflut fluidisch getrennten, zweiten Turbinenflut der Turbine zugeordnet ist. Die erste Turbinenflut weist dabei einen von dem Abgas durchströmbaren, geringeren Strömungsquerschnitt als die zweite Turbinenflut auf. Mit anderen Worten dient die erste Abgasflut zum Führen des Abgases zur ersten Turbinenflut. Das Abgas kann somit von der ersten Abgasflut in die erste Turbinenflut einströmen. Die zweite Abgasflut dient zum Führen des Abgases zur zweiten Turbinenflut, wobei das Abgas aus der zweiten Abgasflut in die zweite Turbinenflut überströmen kann.

Die Turbinenfluten sind dabei asymmetrisch zueinander ausgestaltet, wobei die erste Turbinenflut kleiner als die zweite Turbinenflut ist. Die erste Turbinenflut weist somit ein besseres Aufstauverhalten für das Abgas als die zweite Turbinenflut auf, so dass hierdurch besonders hohe Abgasrückführraten darstellbar sind. Die Zylinderabschaltung für Kraftstoffverbrauchssenkung geschieht bei dem ersten Brennraum und somit bei einem der ersten Abgasflut und somit der ersten Turbinenflut zugeordneten Brennraum, während der der zweiten Abgasflut und der zweiten Turbinenflut zugeordnete, dritte Brennraum im Zylinderabschaltmodus mit Kraftstoff versorgt und demzufolge in einem gefeuerten Betrieb betrieben wird.

Vorzugsweise ist es vorgesehen, dass die Anzahl an der zweiten Abgasflut und der zweiten Turbinenflut zugeordneten Brennräumen, welche im Zylinderabschalt-Modus mit Kraftstoff versorgt werden, größer ist als die Anzahl an der ersten Abgasflut und somit der ersten Turbinenflut zugeordneten Brennräumen der Verbrennungskraftmaschine, welche im Zylinderabschalt-Modus mit Kraftstoff versorgt werden. Vorzugsweise werden alle der zweiten Abgasflut und somit der zweiten Turbinenflut zugeordneten Brennräume der Verbrennungskraftmaschine im Zylinderabschalt-Modus mit Kraftstoff versorgt und demzufolge in einem gefeuerten Betrieb betrieben. Hierdurch werden zum Führen eines überwiegenden Teils des gesamten Abgases der Verbrennungskraftmaschine die zweite Abgasflut und die zweite Turbinenflut genutzt. Da die zweite Turbinenflut größer als die erste Turbinenflut ist, können Strömungswiderstände für den überwiegenden Teil des Abgases gering gehalten werden, woraus ein besonders hoher Wirkungsgrad der Verbrennungskraftmaschine realisiert wird. Dies geht mit einem effizienten und somit kraftstoffverbrauchsgünstigen Betrieb einher.

Darüber hinaus kann die kleinere, erste Turbinenflut beziehungsweise die damit korrespondierende erste Abgasflut genutzt werden, um besonders hohe Abgasrückführraten zu realisieren. Der der ersten Abgasflut zugeordnete zweite Brennraum wird als Spenderzylinder genutzt, dessen Abgas zumindest teilweise und vorzugsweise vollständig rückgeführt wird.

Um ein Verfahren der im Oberbegriff des Patentanspruchs 5 angegebenen Art zu schaffen, mittels welchem sich ein besonders kraftstoffverbrauchsarmer Betrieb der Verbrennungskraftmaschine sowie besonders hohe Rückführraten realisieren lassen, ist es erfindungsgemäß vorgesehen, dass die Verbrennungskraftmaschine in einem Zylinderabschaltmodus betrieben wird, in welchem ein Einbringen von Kraftstoff in einen ersten der Brennräume unterbleibt und in den zweiten Brennraum erfolgt. Mit anderen Worten wird im Zylinderabschalt-Modus Kraftstoff in den zweiten Brennraum eingebracht, so dass dieser in einem befeuerten oder gefeuerten Betriebszustand betrieben wird, in welchem in dem zweiten Brennraum Verbrennungsvorgänge ablaufen. Aus diesen Verbrennungsvorgängen resultiert Abgas, welches über die Abgasrückführleitung zu einem Ansaugtrakt der Verbrennungskraftmaschine rückgeführt werden kann.

Der erste Brennraum wird im Zylinderabschalt-Modus nicht mit Kraftstoff versorgt, so dass der erste Brennraum in einem ungefeuerten oder nicht-befeuerten Betriebszustand betrieben wird. Hierdurch kann Kraftstoff eingespart werden. Vorteilhafte Ausgestaltungen der erfindungsgemäßen Verbrennungskraftmaschine sind als vorteilhafte Ausgestaltungen des erfindungsgemäßen Verfahrens anzusehen und umgekehrt. Gemäß der Erfindung ist das Versperrelement zwischen einer ersten Stellung und wenigstens einer zweiten Stellung verstellbar, wobei das Versperrelement im Zylinderabschalt-Modus in die zweite Stellung verstellt wird, wodurch der Querschnitt der Abgasrückführleitung gegenüber der ersten Stellung vergrößert und der Querschnitt der Abgasflut verkleinert wird. Durch das Verkleinern des Querschnitts der Abgasflut wird ein Rückstau- oder Aufstauverhalten der Abgasflut eingestellt, so dass besonders hohe Mengen an Abgas rückgeführt werden können. Darüber hinaus wird der Querschnitt der Abgasrückführleitung derart freigegeben, dass die hohe Menge des Abgases die Abgasrückführleitung strömungsgünstig durchströmen kann, so dass besonders hohe Mengen des Abgases in kurzer Zeit rückgeführt werden können.

Als besonders vorteilhaft hat es sich gezeigt, wenn der Querschnitt der Abgasflut mittels des Versperrelements in der zweiten Stellung fluidisch versperrt wird. Hierdurch kann das gesamte, die Abgasflut bis zur Abgasrückführleitung durchströmende Abgas genutzt und rückgeführt werden.

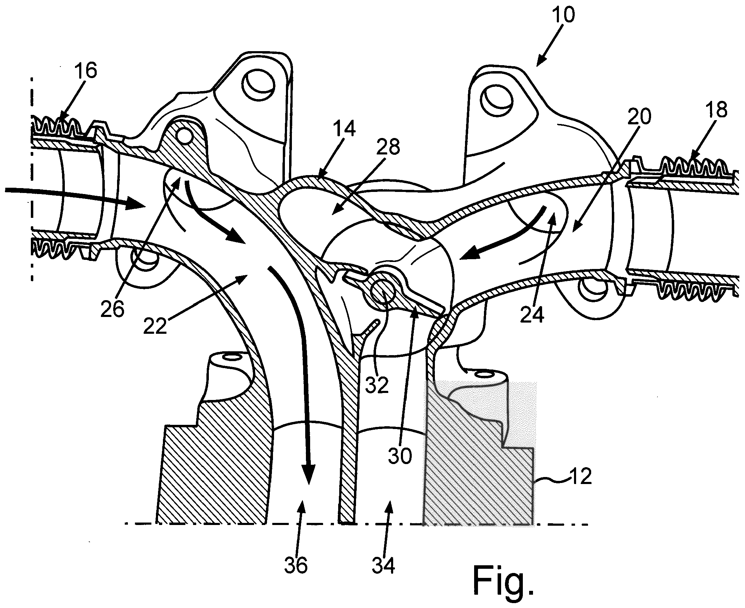

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Fig. ausschnittsweise eine schematische Schnittansicht eines Abgastrakt einer mehrere Brennräume in Form von Zylindern umfassenden Verbrennungskraftmaschine, wobei ein Versperrelement vorgesehen ist, mittels welchem ein jeweiliger, von Abgas durchströmbarer Querschnitt einer Abgasflut des Abgastrakt und einer Abgasrückführleitung der Verbrennungskraftmaschine einstellbar ist.

Die Fig. zeigt einen Abgastrakt 10 für eine Verbrennungskraftmaschine eines Kraftwagens. Die Verbrennungskraftmaschine ist als Hubkolben-Verbrennungskraftmaschine ausgebildet und wird als Antriebsaggregat zum Antreiben des Kraftwagens verwendet. Die Verbrennungskraftmaschine umfasst eine Mehrzahl von Brennräumen in Form von Zylindern. Die Verbrennungskraftmaschine ist beispielsweise als 6-Zylinder-Motor ausgebildet und umfasst demzufolge sechs Zylinder. In einem jeweiligen, gefeuerten Betrieb der Zylinder wird in die Zylinder Kraftstoff eingebracht. Hierdurch wird in dem jeweiligen Zylinder ein Kraftstoff-Luft-Gemisch gebildet, welches verbrannt wird. Dies bedeutet, dass im jeweiligen gefeuerten Betrieb Verbrennungsvorgänge in den jeweiligen Zylindern ablaufen, aus denen Abgas resultiert.

Bei dem Kraftstoff handelt es sich beispielsweise um einen flüssigen Kraftstoff in Form von Benzin oder Diesel, welcher beispielsweise mittels eines jeweiligen Injektors direkt in den Zylinder eingespritzt wird.

Der von dem Abgas durchströmbare Abgastrakt 10 dient dazu, das Abgas aus den Zylindern abzuführen. In dem Abgastrakt ist eine in der Fig. besonders schematische Turbine 12 angeordnet, zu welcher das Abgas geführt wird. Die Turbine 12 ist Bestandteil eines Abgasturboladers der Verbrennungskraftmaschine, welche auch einen Verdichter umfasst. Ein in einem Turbinengehäuse der Turbine 12 angeordnetes Turbinenrad ist von dem Abgas antreibbar und drehfest mit einer Welle des Abgasturboladers verbunden, mit welcher auch ein Verdichterrad des Verdichters verbunden ist. Somit ist das Verdichterrad von dem Turbinenrad antreibbar. Das Verdichterrad dient zum Verdichten von Luft, welche der Verbrennungskraftmaschine über einen in der Fig. nicht dargestellten Ansaugtrakt zugeführt. Die verdichtete Luft strömt durch den Ansaugtrakt in die Zylinder, in denen aus der Luft und dem eingebrachten Kraftstoff das jeweilige Kraftstoff-Luft-Gemisch gebildet wird.

Der Abgastrakt 10 umfasst ein Abgasführungselement 14 sowie zwei Abgasrohre 16, 18. Das Abgasführungselement 14 weist eine von Abgas durchströmbare, erste Abgasflut 20 und eine von Abgas durchströmbare, zweite Abgasflut 22 auf. Die Abgasfluten 20, 22 sind zumindest teilweise und vorzugsweise zumindest überwiegend fluidisch voneinander getrennt. Der ersten Abgasflut 20 sind ein erster, ein zweiter und ein dritter der sechs Zylinder zugeordnet, wobei der zweiten Abgasflut 22 ein vierter, ein fünfter und der sechste der sechs Zylinder zugeordnet sind. Dies bedeutet, dass das Abgas aus dem ersten, dem zweiten und dem dritten Zylinder in die erste Abgasflut 20 strömt beziehungsweise strömen kann, während das Abgas aus dem vierten, dem fünften und dem sechsten Zylinder in die zweite Abgasflut 22 einströmen und diese durchströmen kann. Der erste und der zweite Zylinder sind beispielsweise über das Abgasrohr 18 mit der ersten Abgasflut 20 fluidisch verbunden oder fluidisch verbindbar, während der dritte Zylinder über eine Durchgangsöffnung 24 des Abgasführungselements 14 fluidisch mit der ersten Abgasflut 20 verbunden beziehungsweise verbindbar ist. Beispielsweise sind der vierte und der fünfte Zylinder über das Abgasrohr 16 mit der zweiten Abgasflut 20 fluidisch verbunden beziehungsweise verbindbar, während der sechste Zylinder über eine Durchgangsöffnung 26 des Abgasführungselements 14 fluidisch mit der zweiten Abgasflut 22 verbunden beziehungsweise verbindbar ist. Der erste, der zweite und der dritte Zylinder sind einer ersten Zylinderbank zugeordnet, während der vierte, der fünfte und der sechste Zylinder einer zweiten Zylinderbank der Verbrennungskraftmaschine zugeordnet sind.

Die Verbrennungskraftmaschine umfasst auch eine in der Fig. ausschnittsweise erkennbare Abgasrückführleitung 28. Die Abgasrückführleitung 28 zweigt von der ersten Abgasflut 20 ab. Dies bedeutet, dass die Abgasrückführleitung 28 fluidisch mit der ersten Abgasflut 20 verbindbar oder verbunden ist. Dadurch kann zumindest ein Teil des die erste Abgasflut 20 durchströmenden Abgases bzw. des in die erste Abgasflut 20 einströmenden und zumindest bis zur Abgasrückführleitung 28 strömenden Abgases abgezweigt und in die Abgasrückführleitung 28 eingeleitet werden. Das aus der ersten Abgasflut 20 abgezweigte Abgas kann über die Abgasrückführleitung 28 vom Abgastrakt 10 zum Ansaugtrakt rückgeführt und dort der der Verbrennungskraftmaschine zuzuführenden Luft zugeführt werden. Das rückgeführte Abgas strömt mit der Luft in die Zylinder ein und wirkt bei den Verbrennungsvorgängen als Inertgas. Hierdurch lässt sich die Entstehung von lokal unerwünscht hohen Temperaturen bei den Verbrennungsvorgängen vermeiden, so dass dadurch die Stickoxid-Emissionen (NOₓ-Emissionen) zumindest gering gehalten werden können.

Der Abgastrakt 10 umfasst ein verstellbares Versperrelement in Form einer Klappe 30, welche im Abgasführungselement 14 angeordnet und an diesem um eine Schwenkachse 32 relativ zum Abgasführungselement 14 zwischen wenigstens zwei Stellungen verschwenkbar ist. Zum Verschwenken der Klappe 30 ist beispielsweise ein Motor, insbesondere in Form eines Elektromotors vorgesehen, welcher in der Fig. nicht dargestellt ist.

Wie aus der Fig. zu erkennen ist, ist mittels der Klappe 30 sowohl ein von Abgas durchströmbarer Querschnitt der Abgasrückführleitung 28 als auch ein von Abgas durchströmbarer Querschnitt der ersten Abgasflut 20 einstellbar. Die Klappe 30 ist beispielsweise zwischen einer in der Fig. nicht dargestellten, ersten Stellung und einer in der Fig. gezeigten, zweiten Stellung verschwenkbar. Bezogen auf die Abgasrückführleitung 28 beziehungsweise auf ihren Querschnitt ist die erste Stellung eine Schließstellung, in welcher der Querschnitt der Abgasrückführleitung 28 und somit die Abgasrückführleitung 28 selbst fluidisch versperrt ist. In der Schließstellung kann das in die erste Abgasflut 20 einströmende Abgas nicht aus der ersten Abgasflut 20 in die Abgasrückführleitung 28 einströmen. In der Schließstellung ist der Querschnitt der ersten Abgasflut 20 zumindest teilweise fluidisch freigegeben, so dass die erste Abgasflut 20 von dem Abgas durchströmt werden kann.

Die in der in der Fig. gezeigte zweite Stellung ist eine Freigabestellung, in welcher der Querschnitt der Abgasrückführleitung 28 und somit die Abgasrückführleitung 28 insgesamt gegenüber der Schließstellung freigegeben ist, so dass Abgas aus der ersten Abgasflut 20 in die Abgasrückführleitung 28 einströmen kann. In der Freigabestellung ist der Querschnitt der ersten Abgasflut 20 gegenüber der Schließstellung verengt beziehungsweise zumindest in einem Teilbereich fluidisch versperrt, wobei dieser Teilbereich in der Schließstellung freigegeben ist. Wie aus der Fig. erkennbar ist, ist der Querschnitt der ersten Abgasflut 20 und somit die erste Abgasflut 20 insgesamt in der Freigabestellung fluidisch versperrt, so dass das gesamte, die ersten Abgasflut 20 durchströmende beziehungsweise in die erste Abgasflut 20 einströmende Abgas abgezweigt und in die Abgasrückführleitung 28 eingeleitet wird.

Ist die Klappe 30 in wenigstens eine weitere, von der ersten Stellung und von der zweiten Stellung unterschiedliche Stellung verschwenkbar, in der beide Querschnitte freigegeben sind, so ist es vorzugsweise vorgesehen, dass der Querschnitt der Abgasflut 20 in der Schließstellung der Klappe 30 bezogen auf die anderen Stellungen maximal freigegeben, das heißt am größten ist. Entsprechend ist es vorzugsweise vorgesehen, dass der Querschnitt der Abgasrückführleitung 28 in der Freigabestellung Klappe 30 bezogen auf die anderen Stellungen maximal freigegeben, das heißt am größten ist. Hierdurch kann die Abgasflut 20 in der Schließstellung beziehungsweise die Abgasrückführleitung 28 in der Freigabestellung besonders gut mit einer besonders hohen Menge an Abgas durchströmt werden, so dass Strömungswiderstände und entsprechend Strömungsverluste gering gehalten werden können.

Zur Realisierung eines besonders effizienten und somit kraftstoffverbrauchsarmen Betriebs der Verbrennungskraftmaschine kann diese von einem Normalbetriebsmodus in einen sogenannten Zylinderabschalt-Modus umgeschaltet werden. Im Normalbetriebsmodus werden alle Zylinder in einem gefeuerten Betrieb betrieben. Dies bedeutet, dass in jedem der Zylinder im Normalbetriebsmodus Verbrennungsvorgänge ablaufen, aus denen Abgas resultiert.

Im Zylinderabschalt-Modus, welcher auch als Zylinderabschaltung bezeichnet wird, wird lediglich ein erster Teil der Zylinder mit Kraftstoff versorgt, während ein zweiter Teil der Zylinder nicht mit Kraftstoff versorgt wird. Somit wird der erste Teil in einem gefeuerten Betrieb betrieben, so dass lediglich in dem ersten Teil der Zylinder Verbrennungsvorgänge ablaufen, aus denen Abgas resultiert. Der zweite Teil der Zylinder wird in einem nicht-befeuerten Betrieb betrieben, so dass im zweiten Teil der Zylinder keine Verbrennungen stattfinden und demzufolge kein Abgas entsteht.

Vorliegend ist es vorgesehen, dass im Zylinderabschalt-Modus der erste und der zweite Zylinder abgeschaltet sind, während die anderen Zylinder in einem gefeuerten Betrieb betrieben werden. Dies bedeutet, dass in dem Zylinderabschalt-Modus ein Einbringen von Kraftstoff in den ersten und den zweiten Zylinder unterbleibt, so dass im ersten und im zweiten Zylinder keine Verbrennungsvorgänge stattfinden. Im Zylinderabschalt-Modus erfolgt ein Einbringen von Kraftstoff in den dritten, den vierten, den fünften und den sechsten Zylinder, so dass in diesen Zylindern Verbrennungsvorgänge ablaufen, aus denen Abgas resultiert.

Wie in der Fig. durch Richtungspfeile dargestellt ist, wird die erste Abgasflut 20 im Zylinderabschalt-Modus lediglich mit Abgas aus dem dritten Zylinder versorgt. Die erste Abgasflut 20 wird von dem ersten und dem zweiten Zylinder nicht mit Abgas versorgt. Im Zylinderabschalt-Modus wird die zweite Abgasflut 22 mit Abgas aus dem vierten, dem fünften und dem sechsten Zylinder versorgt.

Die Turbine 12 beziehungsweise ihr Turbinengehäuse weist eine erste Turbinenflut 34 und eine zweite Turbinenflut 36 auf. Die Turbinenfluten 34, 36 sind zumindest teilweise und vorzugsweise zumindest überwiegend fluidisch voneinander getrennt und dienen dazu, das Abgas der Verbrennungskraftmaschine zum Turbinenrad zu führen. Wie aus der Fig. erkennbar ist, ist die erste Turbinenflut 34 der ersten Abgasflut 20 zugeordnet. Dies bedeutet, dass die erste Turbinenflut 34 über die erste Abgasflut 20 mit Abgas versorgt wird. Die erste Turbinenflut 34 ist somit mit der ersten Abgasflut 20 fluidisch verbindbar oder verbunden.

Die zweite Turbinenflut 36 ist der zweiten Abgasflut 22 zugeordnet. Dies bedeutet, dass die zweite Turbinenflut 36 über die zweite Abgasflut 22 mit Abgas zu versorgen ist. Die zweite Turbinenflut 36 ist somit fluidisch mit der zweiten Abgasflut 22 verbunden oder verbindbar. Die Turbinenfluten 34, 36 sind dabei asymmetrisch zueinander ausgebildet, wobei die Turbinenflut 34 kleiner als die Turbinenflut 36 ist. Dies bedeutet, dass die Turbinenflut 34 einen von Abgas durchströmbaren, kleineren Strömungsquerschnitt aufweist als die zweite Turbinenflut 36. Somit weist die erste Turbinenflut 34 ein besseres Aufstauverhalten als die zweite Turbinenflut 36 auf, so dass sich mittels der ersten Turbinenflut 34 und somit mittels der ersten Abgasflut 20 besonders hohe Mengen an Abgas aufstauen beziehungsweise rückstauen und in der Folge rückführen lassen. Gleiches trifft auch auf die Abgasfluten 20, 22 zu, wenn die Einstellbarkeit des Querschnittes der ersten Abgasflut 20 mittels der Klappe 30 zunächst außer Acht gelassen wird. Dies bedeutet, dass die erste Abgasflut 20 grundsätzlich einen geringeren, von Abgas durchströmbaren Querschnitt aufweist als die zweite Abgasflut 22, und vorzugsweise auch dann, wenn sich die Klappe 30 in ihrer Schließstellung befindet.

Es ist auch denkbar, die asymmetrisch ausgebildete Turbine 12 zusätzlich mit einer variablen Turbinengeometrie vorzusehen. Dabei können beide Turbinenfluten 34 und 36 jeweils eine oder eine gemeinsame variable Turbinengeometrie aufweisen. Vorzugsweise ist eine einzig auf die größere Turbinenflut 36 wirkende variable Turbinengeometrie vorgesehen. Abgasturbolader bzw. Turbinen mit variabler Turbinengeometrie (VTG) sind aus dem Stand der Technik hinlänglich bekannt.

Im Zylinderabschalt-Modus durchströmt somit ein überwiegender Teil des gesamten Abgases der Verbrennungskraftmaschine die zweite Abgasflut 22. Dies bedeutet, dass im Zylinderabschalt-Modus die gegenüber der ersten Abgasflut 20 größere, zweite Abgasflut 22 und die gegenüber der ersten Turbinenflut 34 größere, zweite Turbinenflut 36 genutzt werden, um das Abgas zu führen. Aufgrund des jeweiligen, größeren Querschnitts beziehungsweise Strömungsquerschnitts der zweiten Abgasflut 22 und der zweiten Turbinenflut 36 kann hierdurch ein besonders hoher Wirkungsgrad der Verbrennungskraftmaschine realisiert werden, woraus ein besonders geringer Kraftstoffverbrauch resultiert.

Um nun dennoch besonders hohe Mengen an Abgas rückführen zu können, obwohl zwei der drei der ersten Abgasflut 20 zugeordneten Zylinder im Zylinderabschalt-Modus abgeschaltet sind, ist es vorgesehen, dass die Klappe 30 im Zylinderabschalt-Modus in ihre Freigabestellung bewegt wird, so dass der Querschnitt der ersten Abgasflut 20 fluidisch vollständig versperrt ist. Mit anderen Worten wird die Klappe 30 vollständig geöffnet, so dass die kleine Turbinenflut 34 fluidisch versperrt ist und die gesamte Abgasmasse des dritten Zylinders über die Abgasrückführleitung 28 rückgeführt wird. Hierdurch lassen sich beispielsweise Abgasrückführraten (AGR-Raten) von 25% darstellen. Dies lässt einen besonders verbrauchsgünstigen Betrieb der Verbrennungskraftmaschine zu. Der im Zylinderabschalt-Modus noch im gefeuerten Zustand befindliche, dritte Zylinder wird somit als Spenderzylinder genutzt, um besonders hohe Abgasrückführraten darstellen zu können.

## Patentansprüche

1. Verbrennungskraftmaschine für einen Kraftwagen, mit wenigstens zwei Brennräumen, mit einem Abgastrakt (10), welcher wenigstens eine den Brennräumen zugeordnete und von Abgas aus den Brennräumen durchströmbare Abgasflut (20) zum Führen des Abgases zu einer Turbine (12) eines Abgasturboladers aufweist, mit einer von der Abgasflut (20) abzweigenden Abgasrückführleitung (28) und mit einem verstellbaren Versperrelement (30), mittels welchem ein jeweiliger, von Abgas durchströmbarer Querschnitt der Abgasrückführleitung (28) und der Abgasflut (20) einstellbar ist, mit wenigstens einen dritten Brennraum und der Abgastrakt (10) wenigstens eine dem dritten Brennraum zugeordnete, von Abgas aus dem dritten Brennraum durchströmbare und von der Abgasflut (20) zumindest teilweise fluidisch getrennte zweite Abgasflut (22) zum Führen des Abgases zu der Turbine (12) aufweist,
**dadurch gekennzeichnet, dass**
die Verbrennungskraftmaschine in einem Zylinderabschalt-Modus betreibbar ist, in welchem ein Einbringen von Kraftstoff in einen ersten der Brennräume unterbleibt und in den zweiten Brennraum erfolgt und eine Einbringung von Kraftstoff in den dritten Brennraum erfolgt und das Versperrelement (30) zwischen einer ersten Stellung und wenigstens einer zweiten Stellung verstellbar ist, wobei das Versperrelement (30) im Zylinderabschalt-Modus in die zweite Stellung verstellt ist, in welcher der Querschnitt der Abgasrückführleitung (28) gegenüber der ersten Stellung vergrößert und der Querschnitt der Abgasflut (20) verkleinert ist.

2. Verbrennungskraftmaschine nach Anspruch 1,
**dadurch gekennzeichnet, dass**
der Querschnitt der Abgasflut (20) mittels des Versperrelements (30) in der zweiten Stellung fluidisch versperrt ist.

3. Verbrennungskraftmaschine nach einem der Ansprüche 1 oder 2,
**dadurch gekennzeichnet, dass**
die zweite Stellung gegenüber davon unterschiedlichen Stellungen, in die das Versperrelement (30) verstellbar ist, eine den Querschnitt der Abgasrückführleitung (28) maximal freigebende Stellung ist.

4. Verbrennungskraftmaschine nach einem der Ansprüche 1 bis 3,
**dadurch gekennzeichnet, dass**
die erste Abgasflut (20) einer ersten Turbinenflut (34) und die zweite Abgasflut (22) einer zumindest teilweise von der ersten Turbinenflut (34) fluidisch getrennten, zweiten Turbinenflut (36) der Turbine (12) zugeordnet ist, wobei die erste Turbinenflut (34) einen von dem Abgas durchströmbaren, geringeren Strömungsquerschnitt als die zweite Turbinenflut (36) aufweist.

5. Verfahren zum Betreiben einer Verbrennungskraftmaschine für einen Kraftwagen gemäß einem der Ansprüche 1 bis 4,
**dadurch gekennzeichnet, dass**
die Verbrennungskraftmaschine in einem Zylinderabschalt-Modus betrieben wird, in welchem ein Einbringen von Kraftstoff in einen ersten der Brennräume unterbleibt und in den zweiten Brennraum erfolgt und eine Einbringung von Kraftstoff in den dritten Brennraum erfolgt und das Versperrelement (30) zwischen einer ersten Stellung und wenigstens einer zweiten Stellung verstellbar ist, wobei das Versperrelement (30) im Zylinderabschalt-Modus in die zweite Stellung verstellt wird, wodurch der Querschnitt der Abgasrückführleitung (28) gegenüber der ersten Stellung vergrößert und der Querschnitt der Abgasflut (20) verkleinert wird.

6. Verfahren nach Anspruch 5,
**dadurch gekennzeichnet, dass**
der Querschnitt der Abgasflut (20) mittels des Versperrelements (30) in der zweiten Stellung fluidisch versperrt wird.

## Claims

1. Internal combustion engine for a motor vehicle, with at least two combustion chambers, with an exhaust train (10) having at least one exhaust flow (20) assigned to the combustion chambers, through which exhaust gas can flow to be guided to a turbine (12) of a turbocharger, with an exhaust gas recirculation line (28) branching off the exhaust flow (20) and with an adjustable locking element (30), by means of which a respective cross section of the exhaust gas recirculation line (28) and of the exhaust flow (20) through which exhaust gas can flow is adjustable, and with at least one third combustion chamber, the exhaust train (10) having at least one second exhaust flow (22), which is assigned to the third combustion chamber and through which exhaust gas from the third combustion chamber can flow and which is at least partially separated fluidically from the exhaust flow (20), for guiding the exhaust gas to the turbine (12),
**characterised in that**
the internal combustion engine can be operated in a cylinder shut-down mode, in which an introduction of fuel into a first of the combustion chambers is stopped and takes place into the second combustion chamber and an introduction of fuel into the third combustion chamber takes place and the locking element (30) can be adjusted between a first position and at least one second position, wherein the locking element (30) is in the cylinder shut-down mode adjusted to the second position, in which the cross-section of the exhaust gas recirculation line (28) is increased relative to the first position and the cross-section of the exhaust flow (20) is reduced.

2. Internal combustion engine according to claim 1,
**characterised in that**
the cross-section of the exhaust flow (20) is fluidically blocked in the second position by means of the locking element (30).

3. Internal combustion engine according to claim 1 or 2,
**characterised in that**
the second position is, compared to different positions to which the locking element (30) is adjustable, a position which opens up a maximum of the cross-section of the exhaust gas recirculation line (28).

4. Internal combustion engine according to any of claims 1 to 3, **characterised in that**
the first exhaust flow (20) is assigned to a first turbine flow (34) and the second exhaust flow (22) is assigned to a second turbine flow (36) of the turbine (12), which is at least partially separated fluidically from the first turbine flow (34), the first turbine flow (34) having a smaller flow cross-section for the exhaust gas than the second turbine flow (36).

5. Method for operating an internal combustion engine according to any of claims 1 to 4 for a motor vehicle,
**characterised in that**
the internal combustion engine is operated in a cylinder shut-down mode, in which an introduction of fuel into a first of the combustion chambers is stopped and takes place into the second combustion chamber and an introduction of fuel into the third combustion chamber takes place and the locking element (30) can be adjusted between a first position and at least one second position, wherein the locking element (30) is in the cylinder shut-down mode adjusted to the second position, in which the cross-section of the exhaust gas recirculation line (28) is increased relative to the first position and the cross-section of the exhaust flow (20) is reduced.

6. Method according to claim 5,
**characterised in that**
the cross-section of the exhaust flow (20) is fluidically blocked in the second position by means of the locking element (30).

## Revendications

1. Moteur à combustion interne pour un véhicule automobile, comprenant au moins deux chambres de combustion, une ligne d'échappement (10), qui présente au moins un flux de gaz d'échappement (20) associé aux chambres de combustion et pouvant être parcouru par le gaz d'échappement provenant des chambres de combustion pour guider le gaz d'échappement vers une turbine (12) du turbocompresseur à gaz d'échappement, comprenant une conduite de recirculation des gaz d'échappement (28) dérivant du flux de gaz d'échappement (20) et comprenant un élément de fermeture réglable (30) qui permet de régler respectivement une section transversale de la conduite de recirculation de gaz d'échappement (28), pouvant être parcourue par le gaz d'échappement, et du flux de gaz d'échappement (20), comprenant au moins une troisième chambre de combustion et la ligne d'échappement (10) présente au moins un second flux de gaz d'échappement (22) au moins partiellement séparé fluidiquement du flux de gaz d'échappement (20) et associé à la troisième chambre de combustion, pouvant être parcouru par le gaz d'échappement provenant de la troisième chambre de combustion pour guider le gaz d'échappement vers la turbine (12), **caractérisé en ce que** le moteur à combustion interne peut fonctionner dans un mode d'arrêt de cylindre dans lequel un apport en carburant n'a pas lieu dans la première des chambres de combustion et est assuré dans la deuxième chambre de combustion et un apport en carburant est assuré dans la troisième chambre de combustion et l'élément de fermeture est réglé entre la première position et au moins une seconde position, l'élément de fermeture (30) en mode arrêt de cylindre étant réglé dans la seconde position dans laquelle la section transversale de la conduite de recirculation de gaz d'échappement (28) est supérieure par rapport à la première position et la section transversale du flux de gaz d'échappement (20) est inférieure.

2. Moteur à combustion interne selon la revendication 1, **caractérisé en ce que** la section transversale du flux de gaz d'échappement (20) est fermée fluidiquement au moyen de l'élément de fermeture (30) dans la seconde position.

3. Moteur à combustion interne selon l'une quelconque des revendications 1 ou 2, **caractérisé en ce que** la seconde position par rapport aux différentes positions, dans laquelle l'élément de fermeture (30) peut être réglée, est une position libérant au maximum la section transversale de la conduite de recirculation de gaz d'échappement (28).

4. Moteur à combustion interne selon l'une quelconque des revendications 1 à 3, **caractérisé en ce que** le premier flux de gaz d'échappement (20) est associé à un premier flux de turbine (34) et le second flux de gaz d'échappement (22) est associé à un second flux (36) de la turbine, séparé fluidiquement au moins partiellement du premier flux de turbine (34), le second flux de turbine (34) présentant une section transversale d'écoulement pouvant être parcourue par le gaz d'échappement, inférieure à celle du second flux de turbine (36).

5. Procédé de fonctionnement d'un moteur à combustion interne pour un véhicule automobile selon l'une quelconque des revendications 1 à 4, **caractérisé en ce que** le moteur à combustion interne fonctionne en mode arrêt de cylindre dans lequel un apport de carburant n'a pas lieu dans une première chambre de combustion parmi les chambres de combustion et est assuré dans la deuxième chambre de combustion
et un apport en carburant est assuré dans la troisième chambre de combustion et l'élément de fermeture est réglé entre la première position et au moins une seconde position,
l'élément de fermeture (30) étant réglé en mode arrêt de cylindre dans la seconde position, la section de la conduite de recirculation de gaz d'échappement (28) étant de ce fait supérieure par rapport à la première position et la section du flux de gaz d'échappement (20) étant inférieure.

6. Procédé selon la revendication 5, **caractérisé en ce que** la section de flux de gaz d'échappement (20) est fermée fluidiquement au moyen de l'élément de fermeture (30) dans la seconde position.
